**Europäisches Patentamt**

**European Patent Office**

**Office européen des brevets**

(19)

(11) Numéro de publication: **0 185 125**

**A1**

(12)

# DEMANDE DE BREVET EUROPEEN

(21) Numéro de dépôt: **84420205.1**

(22) Date de dépôt: **10.12.84**

(51) Int. Cl.⁴: **B 60 R 25/00**
**G 08 B 15/00**

(43) Date de publication de la demande:
**25.06.86 Bulletin 86/26**

(84) Etats contractants désignés:
**AT BE CH DE FR GB IT LI LU NL SE**

(71) Demandeur: **Marthoud, Bernard**
**43 rue des Fontanières**
**F-69100 Villeurbanne(FR)**

(72) Inventeur: **Marthoud, Bernard**
**43 rue des Fontanières**
**F-69100 Villeurbanne(FR)**

(74) Mandataire: **Maisonnier, Jean**
**28 rue Servient**
**F-69003 Lyon(FR)**

(54) **Dispositif antivol electrique.**

(57) L'invention concerne un appareil antivol pour des locaux ou des véhicules automobiles.

Alimenté en (3) et (4), par exemple à partir d'une batterie de 12 volts, le boîtier électronique (1) fournit des impulsions électriques à moyenne tension dans les fils de sortie (17) et (18). Ces derniers sont reliés, chacun aux fils (19) et (20) d'une paire d'électrodes (21), (22), portées par un support adhésif (23). On colle les supports (23) en des points où un délinquant serait amené à poser la main, si bien qu'il recevrait des décharges électriques calibrées.

FIG 2

La présente invention est relative à un dispositif antivol électrique , susceptible d'être utilisé pour des applications diverses. En particulier , cet appareil peut être monté sur un véhicule automobile .

On connaît l'importance du problème constitué par les vols et cambriolages , en particulier par les vols de véhicules . Divers systèmes ont été proposés pour tenter de s'opposer aux vols . La plupart des appareils connus comprennent un détecteur qui , en cas d'effraction ou de tentative d'effraction , déclenche une alarme sonore qui a pour but d'ameuter le voisinage . En fait , on constate malheureusement que ces alarmes sonores sont de moins en moins dissuasives , face à des cambrioleurs dont la technique consiste maintenant à agir très rapidement .

En autre problème exste actuellement , qui n'est pas résolu . Ce problème concerne les agressions exercées contre le conducteur ou la conductrice d'un véhicule automobile . Les victimes en sont généralement des personnes exerçant des métiers de nuit , notamment les médecins ou les infirmières à domicile . La technique de ces agressions consiste à bloquer le véhicule qui est contraint de s'arrêter, après quoi un déliquant pose la main sur une poignée et ouvre la portière .

La présente invention vise à réaliser un appareil de dissuasion d'un type nouveau , susceptible de jouer non seulement le rôle d'un antivol , mais également celui d'un appareil de dissuasion anti-agression , notamment pour les véhicules automobiles.

Un appareil selon l'invention comprnd un circuit électronique alimenté en courant électrique ,et il est caractérisé en ce que ce circuit fournit des impulsions se succédant à une fréquence prédéterminée , ces impulsions étant envoyées sur au moins deux électrodes voisines l'une de l'autre , et qui se trouvent mises en court-circuit lorsqu'une personne y pose la main .

Suivant une autre caractéristique de l'invention , le circuit électronique est constitué par un circuit intégré filtrant , alimenté en courant continu ,et fournissant des impulsions calibrées .

Suivant une autre caractéristique de l'invention , le circuit électronique comprend un transistor amplificateur et interrupteur .

Suivant une autre caractéristique de l'invention , le circuit électronique comprend un système permettant de régler , à la valeur voulue , la fréquence des impulsions , par exemple au voisinage de 1200 Hertz .

Suivant une autre caractéristique de l'invention , le circuit électronique comprend un varistor , c'est-à-dire un composant à résistance variable , utilisé pour stabiliser l'intensité du courant déchargé pendant que les électrodes sont court-circuitées. Grâce à cette disposition , on peut faire en sorte par exemple , que les décharges successives ne dépassent pas une tension de 265 volts , même si le voleur a les mains mouillées . Autrement dit , l'appareil reste efficace et dissuasif , sans présenter aucun danger pour la vie du délinquant .

Suivant une autre caractéristique de l'invention , la paire d'électrodes est dissimulée derrière la poignée d'une porte ou d'une portière .

Suivant une autre caractéristique de l'invention , le circuit électronique est logé dans un boîtier central , relié par plusieurs paires de fils à un nombre égal de paires d'électrodes , dissimulées en différents endroits sur lesquels un délinquant possible serait amené à poser la main .

Le dessin annexé donné à titre d'exemple non limitatif , permettra de mieux comprendre les caractéristiques de l'invention.

Figure 1 est un schéma illustrant le câblage du circuit électronique selon l'invention .

Figure 2 est une vue en perspective montrant une réalisation pratique pour les différents éléments de l'appareil , susceptible d'être utilisée aussi bien sur un véhicule automobile que pour protéger les portes d'un local .

Figures 3 et 4 montrent une mallette protégée selon l'invention .

Figure 5 est une coupe suivant V – V (Fig. 3) montrant la poignée de la mallette .

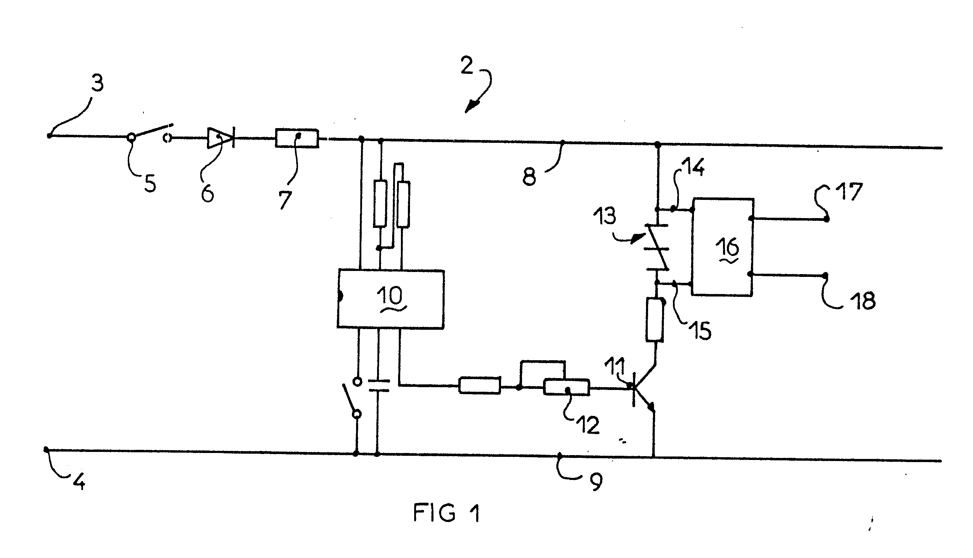

Le dispositif selon l'invention comprend un boîtier central 1 à l'intérieur duquel est placée au moins une carte électronique 2 . Sur cette carte est disposé un circuit électronique du genre illustré sur la figure 1 , à savoir :

- deux bornes d'alimentation 3 et 4 , reliées à une source de courant continu , par exemple sous tension de 12 volts;

- la borne 3 est reliée à un interrupteur de mise en service 5 , puis à une diode 6 , et à une résistance 7 pour se continuer par une ligne 8 ;

- la borne 4 est reliée à une ligne 9 , parallèle à la ligne 8 ;

- entre les lignes 8 et 9 est monté un circuit intégré filtrant 10 , qui fournit des impulsions calibrées, par exemple à une fréquence de l'ordre de 1200 hertz ;

- entre les lignes 8 et 9 , est par ailleurs monté un transistor d'amplification 11 , dont la base est raccor - dée par une résistance variable de réglage 12 , à l'une des bornes du circuit intégré filtrant 10 ;

- entre le collecteur du transistor 11 , et la ligne 8 est intercalé un varistor ( résistance variable) 13 , dont le rôle est de stabiliser l'intensité du courant ;

- en parallèle sur le varistor 13 , sont branchées les lignes d'entrée 14 et 15 d'un transformateur 16 dont les bornes de sortie 17 et 18 fournissent des impulsions à une tension supérieure à celle des lignes d'entrée 14 et 15.

A titre d'exemple , la tension entre les bornes d'entrée 14 et 15 peut petre de 12 volts , alors que la tension entre les bornes de sortie 17 et 18 peut être de 265 volts .

Les bornes de sortie 17 , 18 sont reliées aux deux fils 19 et 20 d'une paire d'électrodes plates 21 et 22 . Chaque paire d'électrodes 21 , 22 est préférablement portée par un support adhésif commun 23 . Sur chaque support 23 , les deux électrodes 21 et 22 sont disposées côte à côte , séparées par un faible interstice 24 .

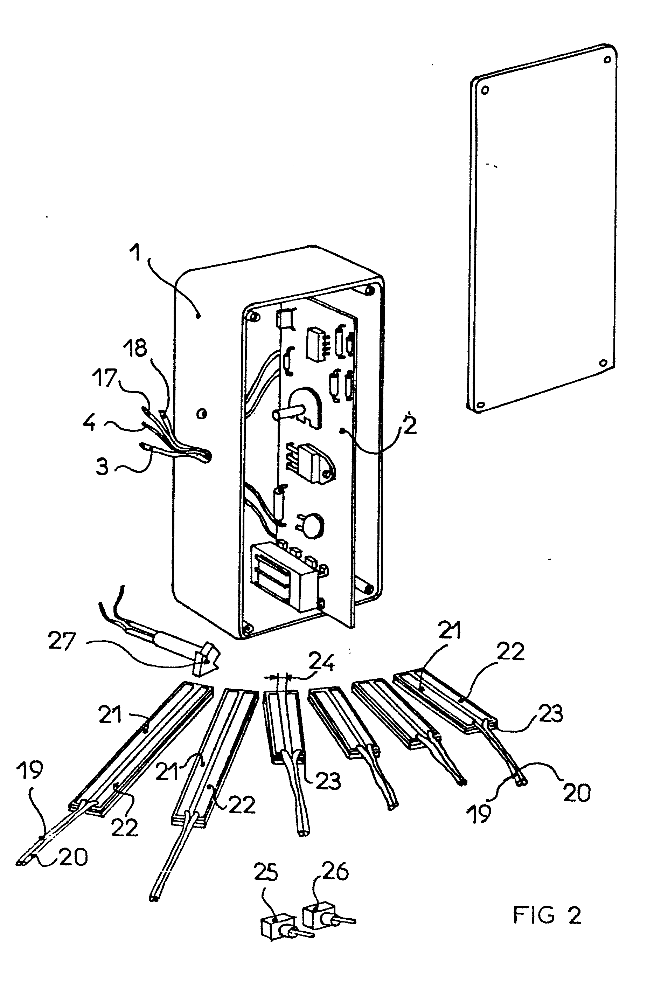

L'appareil illustré sur la figure 2 est complété par un ou plusieurs interrupteurs 25 , 26 , susceptibles d'être intercalés sur un ou plusieurs des câbles 19 , 20 . Enfin , un voyant lumineux 27 est prévu pour signaler la mise sous tension de l'appareil .

4

Le fonctionnement est le suivant :

Les bornes 3 et 4 étant reliées aux deux bornes d'une source d'alimentation continue , par exemple aux deux bornes de la batterie d'un véhicule automobile , le boîtier central 1 est logé dans tout endroit approprié. De là , par les fils de sortie 17 et 18 , le boîtier 1 est relié aux diverses paires d'électrodes 21 , 22 , dont chacune est fixée par son support adhésif 23 , en un endroit où il est prévisible qu'un voleur ou un cambrioleur serait amené à poser la main . Par exemple , sur une voiture automobile , les paires d'électrodes 21 , 22 seraient collées derrière les poignées des portières , ou sous les zones d' ouverture du capot et du coffre à bagages .

Le fonctionnement est le suivant :

Lorsque l'appareil est sous tension , des séries d'impulsions sont régulièrement envoyées vers les électrodes 21 , 22 . Dès qu'un délinquant en puissance pose la main sur l'une des paires d'électrodes 21 , 22 ,il reçoit une série d'impulsions électriques à moyenne tension, qui lui est très désagréable , et lui fait par réflexe , écarter la main .

Ce système est particulièrement intéressant :

- d'une part par l'effet de surprise qu'il produit sur le délinquant ;

- d'autre part , par le fait qu'il constitue , non seulement un antivol efficace , mais également un appareil de dissuasion contre certaines agressions.

En effet , l'appareil peut être mis sous tension par exemple sur un véhicule même pendant que celui-ci circule . Si un ou plusieurs délinquants trouvent le moyen d'immobiliser le véhicule sur la chaussée d'une rue ou d'une route , et s'en approchent pour tenter une agression , ils reçoivent des séries d'impulsions électriques extrêmement désagréables dès qu'ils posent la main sur le véhicule , par exemple pour tenter d'en ouvrir les portières . Le ou les occupants du véhicule se trouvent ainsi protégés .

Pour améliorer encore l'efficacité du dispositif , on voit que la résistance variable 12 permet de régler les impulsions délivrées par les bornes 17 , 18. Par ce moyen , l'utilisateur peut conférer aux impulsions envoyées vers les paires d'électrodes 21 , 22 , les caractéristiques les plus dissuasives , qui ont par exemple automatiquement tendance à repousser et à ramollir la main posée sur les électrodes .

Par ailleurs , la présence du varistor 13 permet de stabiliser l'intensité du courant qui circule entre deux électrodes 21 et 22 , lorsque quelqu'un les a court-circuitées en y posant la main . Par ailleurs , la présence du varistor 13 permet à l'impulsion de ne pas dépasser une tension donnée ( par exemple 265 volts) , même si le voleur a les mains mouillées , si bien que l'appareil reste véritablement sans danger.

Enfin , on remarquera la facilité de montage de l'appareil , étant donné que :

- il suffit de relier les deux bornes 3 et 4 en parallèle sur une quelconque ligne d'alimentation du véhicule ou du local ;

- il n'y a donc pas de fil spécial à tirer ;

- il n'y a pas de polarité particulière à respecter sur les électrodes 21 , 22 ;

- en définitive , aucun risque d'erreur n'est possible au montage .

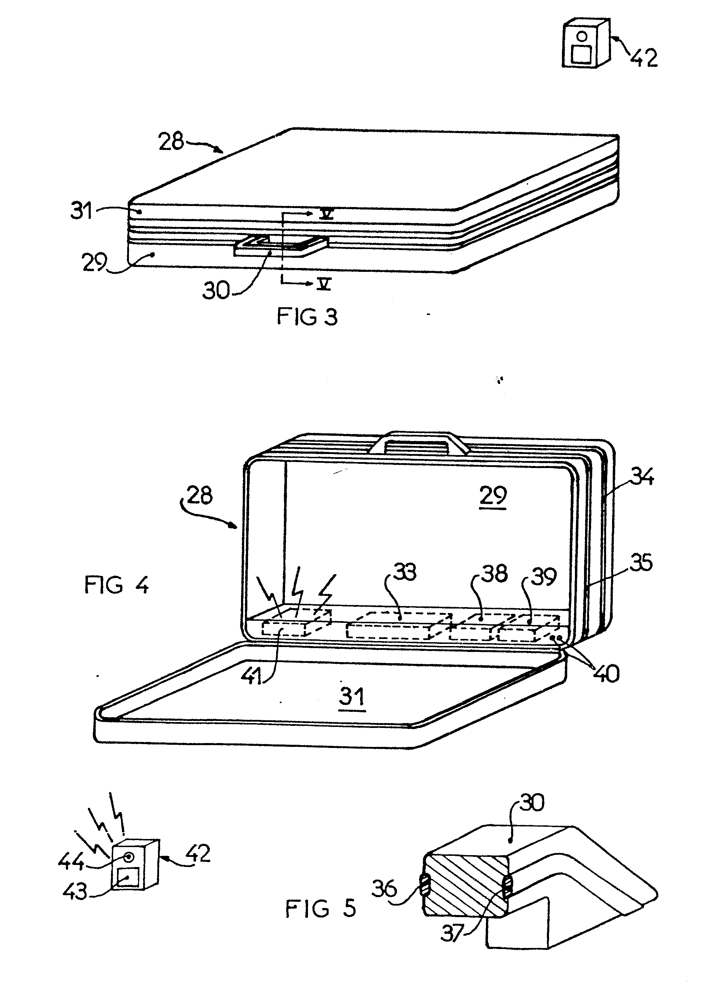

Dans l'exemple illustré sur les Fig. 3 à 5 , on a représenté une mallette ou attaché-case 28 protégée selon l'invention . Une telle mallette peut être utilisée pour transporter des objets précieux (argent liquide, bijoux, pierres précieuses, etc...).

La mallette 28 comporte un corps 29 muni d'une poignée 30 et d'un couvercle ouvrant 31 . A l'intérieur du corps 29 est prévu un compartiment 32 renfermant :

- un boîtier électronique 33 du genre précité , pour engendrer des impulsions à moyenne tension vers des paires d'électrodes telles que 34,35 et 36,37 ;

- une batterie d'accumulateurs 38 pour alimenter le boîtier 33 ;

- un chargeur incorporé 39 pour recharger la batterie 38 ;

- une prise électrique femelle 40 qu'il suffit de relier au réseau pour charger la batterie 38 ,

- un commutateur radiocommandé 41 pour mettre sous tension ou débrancher les circuits du boîtier 33 .

Par ailleurs , l'utilisateur dispose d'un boîtier de télécommande 42 indépendant de la mallette 28 , et susceptible de commander à distance le commutateur 41. Le boîtier 42 comporte par exemple un bouton 43 de mise en marche (fermeture du commutateur 41) et un bouton 44 de mise à l'arrêt (ouverture du commutateur 41) .

Enfin, les électrodes recevant des trains d'impulsions électriques dissuasives comprennent :

- deux joncs enjoliveurs métalliques 34 et 35 disposés côte à côte, chacun d'eux cerclant le corps 29 de la mallette ;
- deux barrettes métalliques 36 et 37 disposées chacune le long des faces latérales opposées de la poignée 30 .

Le fonctionnement est le suivant :

Lorsque l'utilisateur porte la mallette par sa poignée 30, le commutateur 41 est ouvert , le boîtier à impulsions 33 étant ainsi hors service .

Si un voleur lui arrache la mallette et l'emporte , il suffit à l'utilisateur d'appuyer sur le bouton 43 du boîtier de télécommande 42 qu'il a dans sa poche . Aussitôt le commutateur 41 , actionné à distance , branche le boîtier 33 . Le voleur reçoit alors les impulsions dissuasives à 265 volts environ qui lui font lâcher son larcin , si ses mains court-circuitent les électrodes 34,35 ou 36,37 .

Si après une durée prédéterminée (par exemple 30 secondes) il n'a pas encore lâché la mallette , il entend se déclencher un ronfleur d'avertissement , puis reçoit désormais des impulsions émises par le boîtier 33 à plus haute tension (par exemple 1000 ou 1200 volts) .

REVENDICATIONS

1 -Appareil antivol de dissuasion comprenant un circuit électronique (2) alimenté en courant électrique , caractérisé en ce que ce circuit (2) fournit des impulsions se succédant à une fréquence prédéterminée , ces impulsions étant envoyées sur au moins deux électrodes (21) (22) ,voisines l'une de l'autre , et qui se trouvent mises en court-circuit , lorsqu'une personne y pose la main.

2 - Appareil suivant la revendication 1 , caractérisé en ce que le circuit électronique (2) est constitué par un circuit intégré filtrant (10) , alimenté en courant continu en (3) et (4) , et fournissant des impulsions calibrées.

3 - Appareil suivant l'une quelconque des revendications précédentes , caractérisé en ce que le circuit électronique (2) comprend un transistor amplificateur (11) et interrupteur (5).

4 - Appareil suivant l'une quelconque des revendications précédentes , caractérisé en ce que le circuit électronique (2) comprend un système permettant de régler , à la valeur voulue ,la fréquence des impulsions ,par exemple au voisinage de 1200 hertz.

5 - Appareil suivant l'une quelconque des revendications précédentes , caractérisé en ce que le circuit électronique (2) comprend un varistor (13) , c'est-à-dire un composant à résistance variable , utilisé pour stabiliser l'intensité du courant déchargé pendant que les électrodes sont court-circuitées , si bien que l'appareil reste efficace et dissuasif , sans présenter aucun danger pour la vie du déliquant .

6 - Appareil suivant l'une quelconque des revendications précédentes , caractérisé en ce que la paire d'électrodes (21) , (22) ,est dissimulée derrière la poignée d'une porte ou d'une portière.

7 - Appareil suivant l'une quelconque des revendications précédentes , caractérisé en ce que le circuit électronique (2) est logé dans un boîtier central (1) relié par plusieurs paires de fils (19) , (20) à un nombre égal de paires d'électrodes (21) , (22) , dissimulées en différents endroits sur lesquels un délinquant possible serait amené à poser la main.

8 - Appareil suivant l'une quelconque des revendications précédentes , caractérisé en ce que les bornes d'alimentation (3) , (4) , reçoivent une tension continue comprise entre 6 et 30 volts ,alors que les bornes de sortie (17) ,(18) émettent sous une fréquence voisine de 1200 hertz , des impulsions à tension hâchée voisine de 265 volts.

9 - Appareil suivant l'une quelconque des revendications précédentes,caractérisé en ce qu'il équipe une mallette (28) cerclée par deux joncs métalliques parallèles (34), (35) constituant une première paire d'électrodes à impulsions, alors que la poignée (30) de la mallette (28) comporte sur ses faces latérales opposées deux barrettes métalliques (36) et (37) qui constituent une seconde paire d'électrodes à impulsions .

10 - Appareil suivant la revendication 9 , caractérisé en ce que les paires d'électrodes (34), (35) et (36), (37) sont reliées à un boîtier électronique émetteur d'impulsions qu'alimente une batterie (38) rechargeable à partir d'une prise (40) alors que la marche ou l'arrêt des impulsions est commandé par un commutateur (41) qu'actionne à distance une télécommande (42) extérieure à la mallette (28) dont elle est indépendante .

FIG 1

FIG 2

FIG 3

FIG 4

FIG 5

**Office européen des brevets**

**RAPPORT DE RECHERCHE EUROPEENNE**

Numéro de la demande

EP 84 42 0205

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | US-A-2 187 928 (W.G. BARCROFT) <br> * Page 1, colonne de gauche, lignes 3-11,41-46 * | 1 | B 60 R 25/00 <br> G 08 B 15/00 |
| A | GB-A-2 108 303 (Y.L. CHIN) <br> * Page 1, lignes 47-53 * | 1,9 | |
| A | US-A-4 272 763 (B.-L. CHANG) <br> * Colonne 2, lignes 3-6 * | 1,9 | |
| A | GB-A- 991 212 (A.J. SHIPLEY) <br> * Page 1, lignes 8-14 * | 1 | |
| A | DE-B-2 104 607 (A.-A. GORDON) <br> * Colonne 1, lignes 16-21 * | 1 | |

DOMAINES TECHNIQUES
RECHERCHES (Int. Cl 4)

B 60 R 21/00
B 60 R 25/00
A 45 C 13/00
G 08 B 15/00
H 05 C 1/00

Le present rapport de recherche a été établi pour toutes les revendications

| Lieu de la recherche | Date d'achèvement de la recherche | Examinateur |
|---|---|---|
| BERLIN | 11-07-1985 | BECKER W D H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82